# FASCICULE DE BREVET EUROPEEN

(11) **EP 2 038 030 B1**
(45) Date de publication et mention de la délivrance du brevet: **02.03.2011**
(21) Numéro de dépôt: 07765763.3
(22) Date de dépôt: 02.07.2007
(51) Int. Cl.: B01D 11/04, G21C 19/46, C22B 60/02

(54) **PROCEDE POUR SEPARER UN ELEMENT CHIMIQUE DE L'URANIUM(VI) A PARTIR D'UNE PHASE AQUEUSE NITRIQUE, DANS UN CYCLE D'EXTRACTION DE L'URANIUM**
VERFAHREN ZUR ABTRENNUNG EINES CHEMISCHEN ELEMENTS VON URAN(VI) UNTER VERWENDUNG EINER WÄSSRIGEN SALPETERSÄUREPHASE IN EINEM URANEXTRAKTIONSZYKLUS
METHOD FOR SEPARATING A CHEMICAL ELEMENT FROM URANIUM (VI) USING AN AQUEOUS NITRIC PHASE, IN A URANIUM EXTRACTION CYCLE

(30) Priorité: 03.07.2006 FR 0652772
(43) Date de publication de la demande: 25.03.2009
(73) Titulaire: Areva NC, 75009 Paris (FR)
(72) Inventeur: MOULIN, Jean-Paul, 78390 Bois D'arcy (FR); ANDREOLETTI, Gilbert, 50460 Urville-nacqueville (FR); BOURDET, Patrick, 20814 Bethesda (US)
(74) Mandataire: Ilgart, Jean-Christophe
(86) Numéro de dépôt international: PCT/EP2007/056651
(87) Numéro de publication internationale: WO 2008/003681

(56) Documents cités:
- WO-A-99/62824
- DE-A1- 2 460 145
- FR-A- 2 880 180
- FR-A1- 2 591 910
- TAKANASHI, M, HOMMA, S, KOGA, J, MATSUMOTO, S: "Neptunium concentration profiles in the Purex process" JOURNAL OF ALLOYS AND COMPOUNDS, vol. 271-273, 1998, pages 689-692, XP002417682
- ZHAOWU, Z, JIANYU, H, ZEFU, Z, YU, Z, JIANMIN, Z, WEIFANG, Z: "Uranium/plutonium and uranium/neptunium separation by the Purex process using hydroxyurea" JOURNAL OF RADIOANALYTICAL AND NUCLEAR CHEMISTRY, vol. 262, no. 3, 2004, pages 707-711, XP002417683 Budapest

## Description

### DOMAINE TECHNIQUE

La présente invention se rapporte à un procédé permettant de séparer très efficacement un élément chimique de l'uranium(VI) à partir d'une phase aqueuse nitrique, dans un cycle d'extraction de l'uranium et ce, lorsque cet élément chimique est présent dans cette phase aqueuse à une concentration inférieure à celle de l'uranium(VI), voire à l'état de traces, et qu'il est, de plus, moins extractible par l'extractant utilisé dans ce cycle d'extraction que ne l'est l'uranium(VI).

L'élément chimique peut notamment être un actinide tétravalent comme le neptunium ou le thorium 228 (qui est un produit de décroissance de l'uranium 232), mais le procédé selon l'invention peut également s'appliquer à la séparation de tout autre élément chimique susceptible d'être partiellement co-extrait avec l'uranium d'une phase aqueuse acide, dans un cycle d'extraction de l'uranium, comme le zirconium.

Le procédé selon l'invention peut notamment être mis en -uvre dans le cadre d'un procédé de retraitement des combustibles nucléaires irradiés, et en particulier dans le cycle de purification de l'uranium dénommé *"deuxième cycle uranium*" du procédé PUREX ou de tout autre procédé dérivé de celui-ci, soit dans l'objectif de faciliter la décontamination de l'uranium vis-à-vis d'un polluant comme le neptunium, soit dans l'objectif de récupérer un élément chimique qui est présent à l'état de traces dans le flux aqueux concentré en uranium, issu du premier cycle de purification de ce procédé, et qui est susceptible d'être valorisé - ce qui est notamment le cas du thorium 228 -, ces deux objectifs n'étant, d'ailleurs, pas exclusifs l'un de l'autre.

### ÉTAT DE LA TECHNIQUE ANTÉRIEURE

Dans les usines modernes de retraitement des combustibles nucléaires usés telles que les usines UP3 et UP2-800 de la COGEMA en France, Thorp au Royaume-Uni ou Rokkasho au Japon, le retraitement des combustibles usés est basé sur le procédé PUREX et comprend plusieurs cycles de purification.

Le premier cycle de purification vise à séparer conjointement l'uranium et le plutonium des produits de fission puis à réaliser une partition de ces deux éléments en deux flux.

Ainsi, ce premier cycle commence par une opération consistant à co-extraire l'uranium et le plutonium, le premier au degré d'oxydation VI, le second au degré d'oxydation IV, d'une phase aqueuse nitrique qui résulte de la dissolution d'un combustible nucléaire usé dans de l'acide nitrique et qui est appelée, de ce fait, liqueur de dissolution.

Cette co-extraction est réalisée au moyen d'une phase organique non miscible à l'eau, qui est constituée d'un extractant ayant une forte affinité pour l'uranium(VI) et le plutonium(IV), en l'espèce le phosphate de tri-n-butyle (ci-après TBP), en général à 30% en volume dans un diluant organique, en général un hydrocarbure comme le tétrapropylène hydrogéné (ci-après TPH) ou le n-dodécane ou encore l'« *odourless kerosene* ». Elle est complétée par un lavage de la phase organique qui est réalisé au moyen d'une solution aqueuse nitrique et qui est destiné à parfaire la décontamination de l'uranium et du plutonium vis-à-vis des produits de fission.

L'opération de partition de l'uranium et du plutonium est pratiquée ensuite. Elle repose sur une altération volontaire du degré d'oxydation du plutonium(IV) qui est amené à l'état trivalent, où il est très peu extractible par le TBP, pour favoriser son passage dans une solution aqueuse nitrique et le séparer ainsi de l'uranium(VI) qui reste, lui, dans la phase organique. Cette réduction est réalisée à l'aide d'un agent réducteur, le nitrate uraneux, et d'un agent anti-nitreux, l'hydrazine, dont le rôle est de stabiliser à la fois le nitrate uraneux et le plutonium(III) par destruction de l'acide nitreux.

Le neptunium présent dans la liqueur de dissolution est co-extrait, principalement sous forme de neptunium(VI), avec l'uranium et le plutonium. De même, le thorium 228, qui n'existe en solution aqueuse qu'à l'état tétravalent, est partiellement co-extrait avec l'uranium et le plutonium (Germain et al., Journal of Inorganic Nuclear Chemistry, 1970, vol. 32, pp 245-253).

Lors de l'opération de partition, le neptunium(VI) est réduit par le nitrate uraneux en neptunium(IV), état dans lequel il est extractible par le TBP, quoique moins qu'au degré d'oxydation VI. Il reste donc dans la phase organique avec l'uranium, tout comme une large part du thorium(IV).

Après l'opération de partition, l'uranium(VI) est désextrait de la phase organique au moyen d'une solution aqueuse nitrique et les actinides tétravalents qui l'ont suivi au cours des opérations précédentes (neptunium(IV), plutonium(IV) et thorium(IV), ces deux derniers éléments étant présents à l'état de traces) sont désextraits avec lui.

L'effluent aqueux issu de la désextraction de l'uranium est alors soumis, après une opération de concentration intercycle, à un deuxième cycle de purification dit "*deuxième cycle uranium*" pour décontaminer l'uranium vis-à-vis du neptunium. Ce dernier est éliminé par un ajustage au degré d'oxydation V où il est inextractible par le TBP.

Cet ajustage est plus délicat à réaliser que l'opération qui consisterait à ajuster le neptunium au degré d'oxydation IV et à éliminer ce dernier grâce à une saturation de la phase organique en uranium(VI), ce qui serait possible puisque le risque de criticité aura été éliminé du fait de l'élimination de la majeure partie du plutonium à l'étape de partition. Des calculs, confirmés par des essais pilotes, montrent que cette configuration implique toutefois, dans la partie de l'extracteur située immédiatement au voisinage du front d'extraction de l'uranium, une accumulation d'acide nitrique de nature à favoriser la formation d'un pic de neptunium(IV).

Cette configuration rend, d'une part, le schéma extrêmement sensible même aux plus faibles variations de la saturation de la phase organique en uranium(VI) et, d'autre part, très difficile l'arrêt du cycle sans contamination de la fraction de l'uranium traitée en fin de campagne.

Takanashi et al., Neptunium concentration profiles in the Purex process, J. of Alloys and Compounds 271-273 (1998) 689-692 décrivent un procédé selon le préambule de la revendication 1.

Par ailleurs, l'élimination du thorium 228, bien que facilitée par rapport à celle du neptunium(IV) en raison de la moindre extractabilité du thorium tétravalent par le TBP, reste néanmoins limitée pour la même raison, à savoir la formation d'un pic de thorium en amont, dans le sens de circulation de la phase organique dans l'extracteur, du front d'extraction de l'uranium.

Les Inventeurs se sont, donc, fixé pour but de fournir un procédé qui permette, dans un cycle d'extraction de l'uranium tel que celui pratiqué dans le *"deuxième cycle uranium*" du procédé PUREX, de séparer très efficacement un élément chimique de l'uranium(VI) à partir d'une phase aqueuse nitrique lorsque cet élément chimique est présent dans cette phase aqueuse à une concentration moindre que celle de l'uranium(VI), voire à l'état de traces, et qu'il est, en outre, moins extractible par l'extractant choisi pour réaliser ce cycle d'extraction que ne l'est l'uranium(VI).

Les Inventeurs se sont, de plus, fixé pour but de fournir un procédé qui permette de récupérer l'élément chimique sous une forme concentrée et purifiée pour le cas où cet élément est valorisable.

### EXPOSÉ SOMMAIRE DE L'INVENTION

Ce but, et d'autres, sont atteints par un procédé pour séparer un élément chimique de l'uranium(VI) à partir d'une phase aqueuse nitrique A1 dans un cycle d'extraction de l'uranium comprenant :
a) une étape d'extraction de l'uranium(VI), dans laquelle une phase aqueuse circule, à un débit D₁, dans un premier extracteur (10), à contre-courant d'une phase organique, non miscible à l'eau et contenant un extractant, et
b) une étape de lavage de la phase organique obtenue à l'issue de l'étape a) par une phase aqueuse nitrique A2, dans laquelle la phase organique circule dans un deuxième extracteur (11) à contre-courant de la phase A2 ;
dans lequel les premier et deuxième extracteurs sont reliés l'un à l'autre de sorte que la phase aqueuse qui circule dans le premier extracteur soit formée par la phase A1 et par la phase A2 obtenue à l'issue de l'étape b) ; et
dans lequel, l'élément chimique étant présent dans la phase A1 à une concentration inférieure à celle de l'uranium(VI) et étant moins extractible par ledit extractant que ne l'est l'uranium(VI), il s'accumule dans la phase organique au cours de l'étape a) ;
ledit procédé étant **caractérisé en ce que** l'étape a) comprend le soutirage d'une partie de la phase aqueuse circulant dans le premier extracteur, au pic d'accumulation de l'élément chimique dans la phase organique, ou bien en amont (dans le sens de circulation de la phase organique) de ce pic.

Conformément à l'invention, la position exacte du soutirage dans le premier extracteur est choisie en fonction de l'objectif principal que l'on s'est fixé.

Ainsi, un soutirage en amont du pic d'accumulation de l'élément chimique dans la phase organique permettra d'obtenir une meilleure décontamination de l'uranium vis-à-vis de cet élément chimique et réciproquement, et sera donc privilégié dans le cas où l'on cherchera essentiellement à décontaminer l'uranium vis-à-vis d'un polluant, tandis qu'un soutirage au pic d'accumulation de l'élément chimique dans la phase organique permettra d'obtenir une concentration maximale de l'élément chimique dans la partie de phase aqueuse soutirée mais au prix d'une plus forte contamination de cet élément par l'uranium, et sera donc privilégié dans le cas où l'on cherchera essentiellement à récupérer cet élément en vue de sa valorisation.

Quelle que soit la position du soutirage, on préfère que le pic d'accumulation de l'élément chimique dans la phase organique soit prononcé, voire le plus marqué possible.

Aussi, les conditions opératoires des étapes a) et b) sont-elles, de préférence, choisies de sorte à obtenir :
* d'une part, une extraction très forte de l'uranium au cours de l'étape a) et, par la même, une saturation en uranium de la phase organique avant qu'elle ne quitte le premier extracteur ; et
* d'autre part, un facteur d'extraction de l'élément chimique supérieur à 1 et, de préférence, largement supérieur à 1 dans la partie du premier extracteur située en amont (dans le sens de circulation de la phase organique) du front d'extraction de l'uranium, mais inférieur à 1 et, de préférence, largement inférieur à 1 dans le deuxième extracteur ainsi que dans la partie du premier extracteur la plus proche de son alimentation en phase aqueuse.

Ainsi, par exemple, dans le cas où l'élément chimique à séparer de l'uranium est du thorium 228 et où l'on a choisi d'utiliser du phosphate de tri-n-butyle à 30% v/v dans un diluant organique comme phase organique, ces critères seront satisfaits, comme le montrent les résultats expérimentaux rapportés par Germain et al. (ibid) en maintenant :
- dans la partie du premier extracteur située en amont du front d'extraction de l'uranium : une concentration en acide nitrique supérieure à 2 moles/L pour un rapport de débits phase organique/ phase aqueuse de l'ordre de 3 dans le premier extracteur ;
- dans le deuxième extracteur et dans la partie du premier extracteur la plus proche de l'alimentation de ce dernier en phase aqueuse : une concentration en acide nitrique égale ou inférieure à 2 moles/L pour un rapport de débits phase organique/phase aqueuse de l'ordre de 6 dans le deuxième extracteur.

Ceci s'applique également à d'autres espèces chimiques qui ont un comportement analogue à celui du thorium 228 comme, par exemple, le neptunium(IV).

Par ailleurs, il est souhaitable que le débit D₂ du soutirage représente une fraction du débit D₁ telle que le produit de la concentration de l'élément chimique dans la phase aqueuse au moment du soutirage et du débit D₂ soit égal au flux de cet élément qui entre dans le premier extracteur, de sorte que les flux entrant et sortant dudit élément soient équilibrés.

Dans le cas où l'on souhaite récupérer l'élément chimique en vue de sa valorisation, alors le procédé selon l'invention comprend, en outre, une ou plusieurs étapes de concentration et de purification de l'élément chimique présent dans la partie de phase aqueuse soutirée.

Ainsi, dans un premier mode de mise en -uvre préféré du procédé selon l'invention, celui-ci comprend une étape c₁) d'extraction de l'uranium de la partie de phase aqueuse soutirée, au moyen d'une phase organique de même composition que celle utilisée à l'étape a), couplée à une étape d₁) de lavage de cette phase organique par une phase aqueuse nitrique A3.

Conformément à l'invention, l'étape c₁) est, avantageusement, réalisée en additionnant la partie de phase aqueuse soutirée à la phase A3 obtenue à l'issue de l'étape d₁) et en faisant circuler le flux aqueux résultant dans un troisième extracteur, à contre-courant de la phase organique.

Ainsi, en soutirant une partie de ce flux aqueux au cours de l'étape c₁) tout en renvoyant le reste de ce flux, à sa sortie de l'extracteur, vers le premier extracteur, il est possible de récupérer l'élément chimique sous une forme concentrée et purifiée et ce, sans générer d'effluents supplémentaires par rapport à ceux produits au cours des étapes a) et b).

Dans un autre mode de mise en -uvre préféré du procédé selon l'invention, qui est particulièrement bien adapté au cas où l'élément chimique est présent à l'état de traces dans la phase A1, ce procédé comprend une étape c₂) consistant à soumettre la partie de phase aqueuse soutirée à une ou plusieurs chromatographies sur une phase solide stationnaire pour concentrer et purifier l'élément chimique présent dans cette phase.

De préférence, la phase solide stationnaire est une résine échangeuse d'ions.

Conformément à l'invention, l'extractant présent dans les phases organiques utilisées aux étapes peut être toute molécule connue pour présenter une affinité particulière vis-à-vis de l'uranium. Ceci étant, on préfère utiliser un phosphate de trialkyle et, en particulier, le phosphate de tri-n-butyle, qui est l'extractant du procédé PUREX. Auquel cas, celui-ci est, de préférence, utilisé à 30% v/v dans un diluant organique, avantageusement un dodécane linéaire ou ramifié tel que le n-dodécane ou le tétrapropylène hydrogéné.

La phase A1 est, de préférence, une phase aqueuse nitrique d'acidité élevée, de concentration en acide nitrique de l'ordre de 4 à 6 mol/L, auquel cas les phases aqueuses nitriques utilisées pour les lavages (phases A2 et A3) sont de faible acidité, par exemple de concentration en acide nitrique inférieure ou égale à 2 mol/L.

Le procédé selon l'invention présente de nombreux avantages, à savoir :
* celui de permettre une décontamination très efficace de l'uranium(VI) vis-à-vis de l'élément chimique et réciproquement ;
* celui de permettre également une décontamination très efficace de l'élément chimique vis-à-vis des polluants inextractibles de l'uranium(VI) ;
* celui de permettre une concentration et une purification de l'élément chimique, si l'on souhaite récupérer cet élément.

En outre, appliqué dans un cycle d'extraction de l'uranium, le procédé selon l'invention permet d'éviter que ne se produise, à l'arrêt du cycle, une pollution de l'uranium par l'élément chimique : en effet, il suffit de poursuivre l'étape a) en alimentant le premier extracteur en uranium décontaminé tout en continuant à soutirer une partie de la phase aqueuse circulant dans cet extracteur pour résorber l'accumulation de l'élément chimique sans polluer le dernier lot d'uranium.

Conformément à l'invention, l'élément chimique est, de préférence, un actinide tétravalent choisi parmi le neptunium et le thorium 228.

L'invention a également pour objet un procédé de retraitement d'un combustible nucléaire usé, qui est **caractérisé en ce qu'**il met en -uvre un procédé de séparation tel que précédemment défini.

L'invention a encore pour objet un cycle de purification de l'uranium d'un procédé PUREX, qui est **caractérisé en ce qu'**il comprend la mise en -uvre d'un procédé de séparation tel que précédemment défini, auquel cas l'élément chimique à séparer de l'uranium(VI) est, de préférence, un actinide tétravalent choisi parmi le neptunium et le thorium 228.

L'invention sera mieux comprise à la lecture du complément de description qui suit et qui se réfère aux figures annexées.

Il va de soi que ce complément de description n'est donné qu'à titre d'illustration de l'objet de l'invention et ne constitue en aucun cas une limitation de cet objet.

### BRÈVE DESCRIPTION DES DESSINS

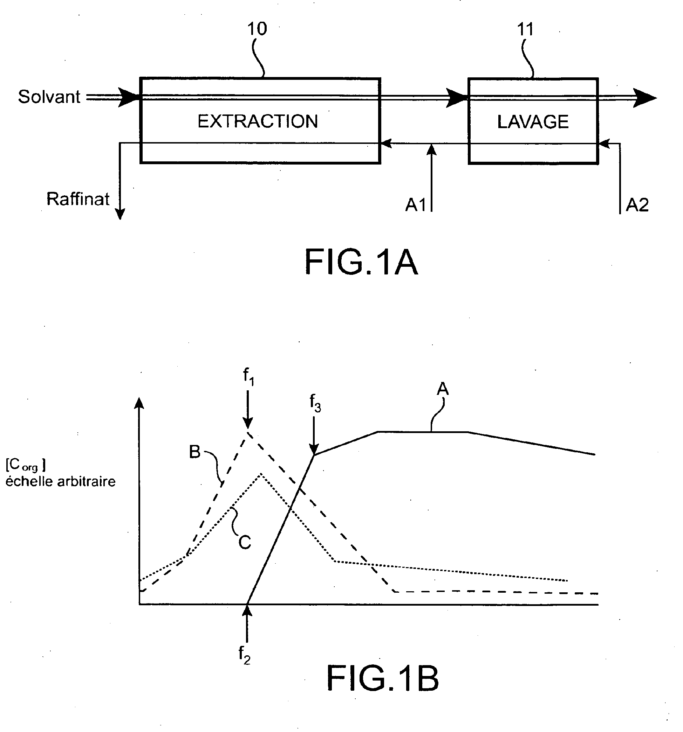

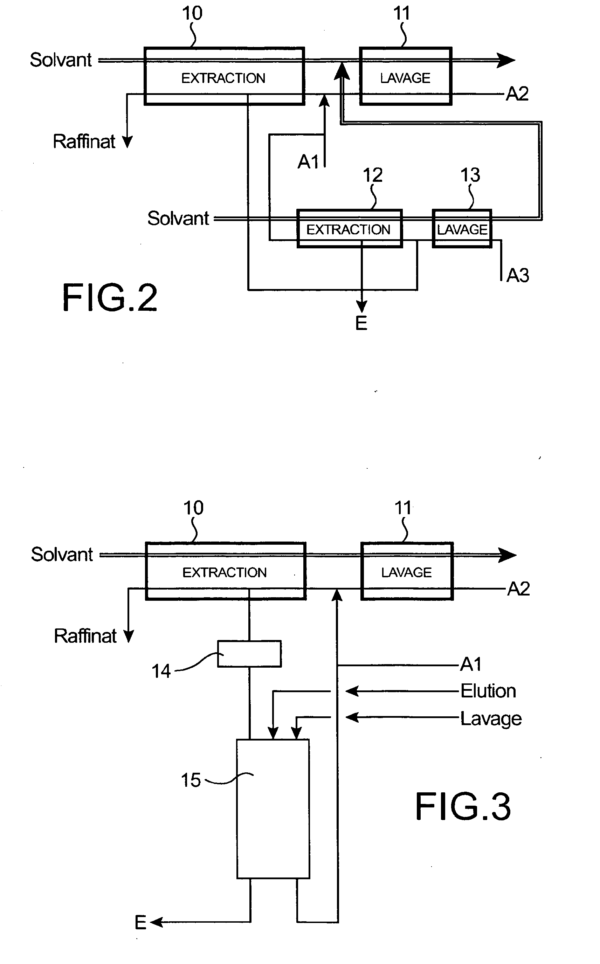

Les figures 1A et 1B sont destinées à faciliter la compréhension de l'invention, tandis que les figures 2 et 3 se rapportent à des exemples de mise en -uvre du procédé selon l'invention. Ainsi :
- la figure 1A correspond à un schéma de principe d'un cycle d'extraction tel qu'il est susceptible d'être mis en -uvre pour décontaminer l'uranium(VI) présent dans une phase aqueuse nitrique vis-à-vis d'un élément chimique, moins extractible que lui, par exemple dans le cadre du *"deuxième cycle uranium*" d'un procédé PUREX ;
- la figure 1B représente les profils de concentration [C_{org}] de l'uranium(VI) (courbe A) et de l'élément chimique (courbe B) dans la phase organique, ainsi que le profil d'acidité (courbe C) de cette phase, au cours du cycle d'extraction illustré sur la figure 1A ;
- la figure 2 illustre, de façon schématique, un exemple du premier mode de mise en -uvre préféré du procédé selon l'invention ; tandis que
- la figure 3 illustre, de façon schématique, un exemple du deuxième mode de mise en -uvre préféré du procédé selon l'invention.

Sur les figures 1A, 2 et 3, les extracteurs sont symbolisés par des rectangles, les flux de phase organique sont symbolisés par un double trait et cette phase est dénommée plus simplement "solvant", tandis que les flux aqueux sont symbolisés par un simple trait.

Les opérations de lavage des phases aqueuses par une phase organique n'ont volontairement pas été représentées par souci de simplification des figures.

### EXPOSÉ DÉTAILLÉ DE L'INVENTION

On se réfère tout d'abord à la figure 1A qui représente schématiquement un cycle d'extraction tel qu'il est susceptible d'être mis en -uvre pour décontaminer l'uranium(VI) présent dans une phase aqueuse nitrique, dénommée phase A1, vis-à-vis d'un élément chimique, dénommé élément E, moins extractible que lui, par exemple dans le cadre du *"deuxième cycle uranium*" d'un procédé PUREX.

Dans cette phase A1, l'uranium(VI) est présent à une concentration élevée, par exemple de l'ordre de 400 g/L, tandis que l'élément E, qui est, par exemple, du neptunium(IV) ou du thorium 228 (qui est également tétravalent) est présent à une concentration beaucoup plus faible, par exemple de l'ordre de 1% ou moins de celle de l'uranium, voire à l'état de traces.

Quand à la concentration de l'acide nitrique dans la phase A1, elle est, par exemple, de 4 à 6 moles/L.

Dans cet exemple, le cycle d'extraction comprend :
* une étape d'extraction proprement dite, qui vise à extraire l'uranium(VI) de la phase A1 au moyen d'une phase organique, non miscible à l'eau et contenant un extractant capable d'extraire l'uranium et, à un moindre degré, l'élément E, et
* une étape de lavage de la phase organique par une phase aqueuse nitrique (dénommée ci-après phase A2), qui vise, elle, à désextraire de la phase organique la fraction d'élément E ayant été extraite avec l'uranium(VI) à l'étape précédente.

La phase organique est, par exemple, composée de phosphate de tri-*n*-butyle à 30% v/v dans un dodécane, tandis que la phase A2 est, par exemple, une solution aqueuse d'acidité inférieure à 2 moles/L de HNO₃, par exemple de l'ordre de 1 mole/L.

Comme visible sur la figure 1A, ces étapes d'extraction et de lavage sont réalisées dans deux extracteurs différents, respectivement 10 et 11, qui sont, de préférence, multiétagés (du type mélangeurs-décanteurs ou colonnes pulsées), qui sont reliés l'un à l'autre et dans lesquels les phases solvant et aqueuses sont mises à circuler à contre-courant.

L'extracteur 10 est donc alimenté :
* à l'une de ses extrémités, par un flux de phase organique fraîche, et
* à l'autre de ses extrémités, par un flux aqueux formé par la phase A2 ayant servi à laver la phase organique dans l'extracteur 11 à laquelle est ajoutée la phase A1 ; tandis que l'extracteur 11 est alimenté :
   * à l'une de ses extrémités, par la phase organique ayant servi à extraire l'uranium dans l'extracteur 10, et
   * à l'autre de ses extrémités, par un flux de phase A2 fraîche.

On se réfère à présent à la figure 1B qui représente les profils de concentration [C_{org}] de l'uranium (courbe A) et de l'élément E (courbe B) dans la phase organique, ainsi que le profil d'acidité (courbe C) de cette phase, sur l'ensemble de son parcours dans les extracteurs 10 et 11.

Cette figure montre qu'il se produit, dans la partie de l'extracteur 10 située en amont (dans le sens de circulation de la phase organique) du front d'extraction de l'uranium qui correspond au segment de la courbe A qui est compris entre les flèches f₂ et f₃ -, une accumulation d'acide nitrique dans la phase organique qui favorise le passage de l'élément E dans la phase organique et la formation d'un pic d'accumulation de cet élément dans cette phase organique (et, de façon inséparable, aussi dans la phase aqueuse).

L'existence de ce pic d'accumulation de l'élément E s'oppose à une séparation efficace de l'uranium et de cet élément et, donc, à la possibilité de décontaminer de façon satisfaisante l'uranium vis-à-vis de l'élément E et, réciproquement, l'élément E vis-à-vis de l'uranium.

C'est la raison pour laquelle l'invention propose de soutirer une partie de la phase aqueuse circulant dans l'extracteur 10, au pic d'accumulation de l'élément E dans la phase organique ou avant que ne se produise ce pic, c'est-à-dire, dans la configuration illustrée sur la figure 1B, dans la partie du réacteur 10 située au niveau de la flèche f₁ ou en amont (dans le sens de circulation de la phase organique) de cette flèche.

Comme précédemment indiqué, la position exacte du soutirage est choisie en fonction du paramètre que l'on souhaite privilégier.

Ainsi, un soutirage au pic d'accumulation de l'élément chimique dans la phase organique permettra d'obtenir une concentration maximale de l'élément chimique dans la partie de phase aqueuse soutirée mais au prix d'une relativement forte contamination de cet élément par l'uranium, tandis qu'un soutirage en amont de ce pic permet d'obtenir une meilleure décontamination de l'uranium vis-à-vis de l'uranium et réciproquement mais au prix d'une concentration moindre de l'élément E dans la partie de phase aqueuse soutirée.

On se réfère à présent à la figure 2 qui illustre, de façon schématique, un exemple du premier mode de mise en -uvre préféré du procédé selon l'invention, dans lequel la partie de la phase aqueuse soutirée dans l'extracteur 10 est soumise à un cycle complémentaire d'extraction pour concentrer et purifier l'élément E.

Le procédé selon l'invention comprend donc deux cycles d'extraction, couplés l'un à l'autre, à savoir :
* un premier cycle, qui est identique à celui illustré sur la figure 1A, à ceci près qu'une partie de la phase aqueuse circulant dans l'extracteur 10 est soutirée au pic d'accumulation de l'élément E dans la phase organique ou en amont (dans le sens de circulation de la phase organique) de ce pic, et
* un deuxième cycle, qui comprend :
   - une étape d'extraction proprement dite qui vise à extraire l'uranium(VI) présent dans la partie de phase aqueuse soutirée dans l'extracteur 10 de cette partie de phase aqueuse, au moyen d'une phase organique, laquelle est avantageusement de même composition que celle utilisée dans le premier cycle d'extraction (TBP à 30% v/v dans un diluant organique), et
   - une étape de lavage de la phase organique par une phase aqueuse nitrique (dénommée ci-après phase A3), par exemple une solution aqueuse d'acidité inférieure à 2 moles/L de HNO₃, qui vise à désextraire de la phase organique la fraction d'élément E ayant été extraite avec l'uranium(VI) à l'étape précédente.

Comme visible sur la figure 2, les étapes d'extraction et de lavage de ce deuxième cycle sont réalisées, comme celles du premier cycle, dans deux extracteurs différents, respectivement 12 et 13, qui sont reliés l'un à l'autre et dans lesquels les phases solvant et aqueuses sont mises à circuler à contre-courant.

Ainsi, l'extracteur 12 est alimenté :
* à l'une de ses extrémités, par un flux de phase organique fraîche, et
* à l'autre de ses extrémités, par un flux aqueux formé par la phase A3 ayant servi à laver la phase organique dans l'extracteur 13, à laquelle est ajoutée la partie de phase aqueuse soutirée dans l'extracteur 10 ; tandis que l'extracteur 13 est alimenté :
   * à l'une de ses extrémités, par la phase organique ayant servi à extraire l'uranium dans l'extracteur 12, et
   * à l'autre de ses extrémités, par un flux de phase A3 fraîche.

En soutirant une fraction de la phase aqueuse circulant dans l'extracteur 12 tout en envoyant, d'une part, le reste de cette phase aqueuse, une fois sortie de cet extracteur, rejoindre la phase A1 avant que celle-ci ne soit ajoutée à la phase A2, et, d'autre part, la phase organique issue de l'extracteur 13 rejoindre la phase organique issue de l'extracteur 10 avant que celle-ci ne pénètre dans l'extracteur 11, il est possible de faire fonctionner le deuxième cycle d'extraction en boucle par rapport au premier et de récupérer, dans la fraction de phase aqueuse soutirée dans l'extracteur 12, l'élément E, à la fois concentré et purifié, sans générer d'effluents supplémentaires par rapport à ceux produits dans le premier cycle d'extraction.

On se réfère à présent à la figure 3 qui illustre, de façon schématique, un exemple du deuxième mode de mise préféré du procédé selon l'invention, dans lequel la partie de phase aqueuse soutirée dans l'extracteur 10 est soumise à des opérations complémentaires de chromatographie sur résine échangeuse d'ions pour concentrer et purifier l'élément E qu'elle contient, et qui est particulièrement bien adapté au cas où l'élément E est à l'état de traces dans la phase A1.

Dans cet exemple, le procédé comprend, tout d'abord, un cycle d'extraction qui est identique à celui illustré sur la figure 1A, à ceci près qu'une partie de la phase aqueuse circulant dans l'extracteur 10 est soutirée au pic d'accumulation de l'élément E dans la phase organique ou en amont (dans le sens de circulation de la phase organique) de ce pic.

Puis, la fraction de phase aqueuse soutirée est amenée dans une cuve tampon 14 où elle est stockée avant d'être acheminée vers une colonne 15 remplie d'une résine échangeuse d'ions.

L'élution, puis le lavage de la résine par des phases aqueuses nitriques permet de récupérer à la sortie de la colonne des fractions riches en élément E et des fractions riches en uranium(VI). Ces dernières sont envoyées rejoindre la phase A1 avant que celle-ci ne soit ajoutée à la phase A2.

## Revendications

1. Procédé pour séparer un élément chimique de l'uranium(VI) à partir d'une phase aqueuse nitrique A1, dans un cycle d'extraction de l'uranium comprenant :
a) une étape d'extraction de l'uranium(VI), dans laquelle une phase aqueuse circule, à un débit D₁, dans un premier extracteur (10), à contre-courant d'une phase organique, non miscible à l'eau et contenant un extractant, et
b) une étape de lavage de la phase organique obtenue à l'issue de l'étape a) par une phase aqueuse nitrique A2, dans laquelle la phase organique circule dans un deuxième extracteur (11) à contre-courant de la phase A2 ;
dans lequel les premier et deuxième extracteurs sont reliés l'un à l'autre de sorte que la phase aqueuse qui circule dans le premier extracteur soit formée par la phase A1 et par la phase A2 obtenue à l'issue de l'étape b) ; et
dans lequel, l'élément chimique étant présent dans la phase A1 à une concentration inférieure à celle de l'uranium(VI) et étant moins extractible par ledit extractant que ne l'est l'uranium(VI), s'accumule dans la phase organique au cours de l'étape a) ;
ledit procédé étant **caractérisé en ce que** l'étape a) comprend le soutirage d'une partie de la phase aqueuse circulant dans le premier extracteur, au pic d'accumulation de l'élément chimique dans la phase organique, ou bien en amont, dans le sens de circulation de la phase organique, de ce pic.

2. Procédé selon la revendication 1, **caractérisé en ce que** le débit D₂ du soutirage représente une fraction du débit D₁ telle que le produit de la concentration de l'élément chimique dans phase aqueuse circulant dans le premier extracteur, au moment du soutirage, et du débit D₂ soit égal au flux de cet élément qui entre dans le premier extracteur.

3. Procédé selon l'une quelconque des revendications précédentes, **caractérisé en ce qu'**il comprend, en outre, une ou plusieurs étapes de concentration et de purification de l'élément chimique présent dans la partie de phase aqueuse soutirée.

4. Procédé selon la revendication 3, **caractérisé en ce qu'**il comprend une étape c₁) d'extraction de l'uranium présent dans la partie de phase aqueuse soutirée, au moyen d'une phase organique de même composition que celle utilisée à l'étape a), couplée à une étape d₁) de lavage de cette phase organique par une phase aqueuse nitrique A3.

5. Procédé selon la revendication 4, **caractérisé en ce que** l'étape c₁) est réalisée en additionnant la partie de phase aqueuse soutirée à la phase A3 obtenue à l'issue de l'étape d₁) et en faisant circuler le flux aqueux résultant dans un troisième extracteur (12), à contre-courant de la phase organique.

6. Procédé selon la revendication 5, **caractérisé en ce que** l'étape c₁) comprend le soutirage d'une partie du flux aqueux circulant dans le troisième extracteur et le renvoi de l'autre partie vers le premier extracteur.

7. Procédé selon la revendication 3, **caractérisé en ce qu'**il comprend une étape c₂) consistant à soumettre la partie de phase aqueuse soutirée à une ou plusieurs chromatographies sur une phase solide stationnaire.

8. Procédé selon la revendication 7, **caractérisé en ce que** la phase solide stationnaire est une résine échangeuse d'ions.

9. Procédé selon l'une quelconque des revendications précédentes, **caractérisé en ce que** l'extractant est du phosphate de tri-n-butyle que l'on emploie, de préférence, à 30% v/v dans un diluant organique, avantageusement un dodécane.

10. Procédé selon la revendication 9, **caractérisé en ce que** la phase A1 présente une molarité allant de 4 à 6 M.

11. Procédé selon la revendication 9 ou la revendication 10, **caractérisé en ce que** la phase A2 présente une molarité inférieure ou égale à 2 M.

12. Procédé selon la revendication 9 dépendant de la revendication 4, **caractérisé en ce que** la phase A3 présente une molarité inférieure ou égale à 2 M.

13. Procédé selon l'une quelconque des revendications précédentes, **caractérisé en ce que** l'élément chimique est un actinide tétravalent choisi parmi le neptunium et le thorium 228.

14. Procédé de retraitement d'un combustible nucléaire usé, **caractérisé en ce qu'**il met en -uvre un procédé de séparation selon l'une quelconque des revendications 1 à 13.

15. Cycle de purification de l'uranium d'un procédé PUREX, **caractérisé en ce qu'**il comprend la mise en oeuvre d'un procédé de séparation selon l'une quelconque des revendications 1 à 12.

16. Cycle de purification selon la revendication 15, **caractérisé en ce que** le procédé est mis en -uvre pour séparer un actinide tétravalent choisi parmi le neptunium et le thorium de l'uranium(VI).

## Claims

1. A method for separating a chemical element from uranium(VI) starting from a nitric aqueous phase A1, in an extraction cycle for the uranium comprising:
a) a uranium(VI) extraction step, in which an aqueous phase flows, with a flow rate D₁, in a first extractor (10), in counter-flow to an organic phase, immiscible with water and containing an extractant, and
b) a step for washing the organic phase obtained after the step a) with a nitric aqueous phase A2, in which the organic phase flows in a second extractor (11) in counter-flow to the phase A2;
in which the first and second extractors are connected to one another in such a manner that the aqueous phase flowing in the first extractor is formed by the phase A1 and by the phase A2 obtained after the step b); and
in which, since the chemical element is present in the phase A1 at a concentration lower than that of the uranium(VI) and is less extractable by said extractant than is the uranium(VI), it accumulates in the organic phase in the course of the step a);
said process being **characterized in that** the step a) comprises the drawing-off of a part of the aqueous phase flowing in the first extractor, at the accumulation peak of the chemical element in the organic phase, or else upstream, relative to the direction of flow of the organic phase, of this peak.

2. The process as claimed in claim 1, **characterized in that** the flow rate D₂ of the draw-off represents a fraction of the flow rate D₁ such that the product of the concentration of the chemical element in aqueous phase flowing in the first extractor, when the draw-off occurs, and the flow rate D₂ is equal to the flow of this element entering the first extractor.

3. The process as claimed in any one of the preceding claims, **characterized in that** it additionally comprises one or more steps for concentration and purification of the chemical element present in the drawn-off part of the aqueous phase.

4. The process as claimed in claim 3, **characterized in that** it comprises a step c₁) for extraction of the uranium present in the drawn-off part of aqueous phase, by means of an organic phase of the same composition as that used in the step a), coupled with a step d₁) for washing this organic phase with a nitric aqueous phase A3.

5. The process as claimed in claim 4, **characterized in that** the step c₁) is carried out by adding the drawn-off part of the aqueous phase to the phase A3 obtained after the step d₁) and by making the resulting aqueous stream flow in a third extractor (12), in counter-flow to the organic phase.

6. The process as claimed in claim 5, **characterized in that** the step c₁) comprises the drawing-off of a part of the aqueous stream flowing in the third extractor and the return of the other part toward the first extractor.

7. The process as claimed in claim 3, **characterized in that** it comprises a step c₂) consisting in subjecting the drawn-off part of the aqueous phase to one or more chromatographies on a stationary solid phase.

8. The process as claimed in claim 7, **characterized in that** the stationary solid phase is an ion exchange resin.

9. The process as claimed in any one of the preceding claims, **characterized in that** the extractant is tri-*n*-butyl phosphate which is preferably employed with 30% v/v in an organic dilutant, advantageously a dodecane.

10. The process as claimed in claim 9, **characterized in that** the phase A1 exhibits a molarity going from 4 to 6 M.

11. The process as claimed in either of claims 9 and 10, **characterized in that** the phase A2 exhibits a molarity less than or equal to 2 M.

12. The process as claimed in claim 9 dependent on claim 4, **characterized in that** the phase A3 exhibits a molarity less than or equal to 2 M.

13. The process as claimed in any one of the preceding claims, **characterized in that** the chemical element is a tetravalent actinide chosen from between neptunium and thorium 228.

14. A reprocessing operation for a spent nuclear fuel, **characterized in that** it implements a separation process as claimed in any one of claims 1 to 13.

15. A purification cycle for the uranium from a PUREX process, **characterized in that** it comprises the implementation of a separation process as claimed in any one of claims 1 to 12.

16. The purification cycle as claimed in claim 15, **characterized in that** the process is implemented for separating a tetravalent actinide chosen from between neptunium and thorium from the uranium(VI).

## Patentansprüche

1. Verfahren zum Trennen eines chemischen Elementes von Uran (VI) ausgehend von einer wässrigen Salpetersäurephase A1, in einem Uranextraktionszyklus, aufweisend:
(a) einen Schritt einer Extraktion von Uran (VI), bei dem eine wässrige Phase mit einem Durchsatz D₁ in einer ersten Extraktionseinrichtung (10) zirkuliert, und zwar in Gegenstrom zu einer organischen Phase, die nicht mit Wasser mischbar ist und ein Extraktionsmittel enthält, und
(b) einen Schritt des Waschens der nach erfolgtem Schritt a) erhaltenen organischen Phase mittels einer wässrigen Salpetersäurephase A2, bei dem die organische Phase in einer zweiten Extraktionseinrichtung (11) in Gegenstrom zur Phase A2 zirkuliert;
bei welchem die ersten und zweiten Extraktionseinrichtungen miteinander verbunden sind, so dass die wässrige Phase, die in der ersten Extraktionseinrichtung zirkuliert, durch die Phase A1 und durch die Phase A2, die nach erfolgtem Schritt b) erhalten wird, gebildet ist; und
bei welchem das chemische Element, das in der Phase A1 in einer geringeren Konzentration als das Uran (VI) vorhanden ist und das sich durch das Extraktionsmittel weniger leicht extrahieren lässt als das Uran (VI), sich in der organischen Phase im Verlauf von Schritt a) akkumuliert;
wobei das Verfahren **dadurch gekennzeichnet ist, dass** Schritt a) den Abzug eines Teils der in der ersten Extraktionseinrichtung zirkulierenden wässrigen Phase beinhaltet, und zwar bei der Akkumulationsspitze des chemischen Elementes in der organischen Phase oder in Strömungsrichtung vor, und zwar bezogen auf die Zirkulationsrichtung der organischen Phase, dieser Spitze.

2. Verfahren nach Anspruch 1, **dadurch gekennzeichnet, dass** der Durchsatz D₂ des Abzugs einen Anteil des Durchsatzes D₁ repräsentiert, derart, dass das Produkt aus der Konzentration des chemischen Elementes in der in der ersten Extraktionseinrichtung zirkulierenden wässrigen Phase im Moment des Abzugs und dem Durchsatz D₂ gleich groß wie der Fluss dieses Elementes ist, der in die erste Extraktionseinrichtung eintritt.

3. Verfahren nach einem der vorhergehenden Ansprüche, **dadurch gekennzeichnet, dass** es weiter einen oder mehrere Schritte einer Konzentration und einer Reinigung des chemischen Elementes aufweist, das in dem Teil der abgezogenen wässrigen Phase vorhanden ist.

4. Verfahren nach Anspruch 3, **dadurch gekennzeichnet, dass** es einen Schritt c₁) eines Extrahierens des Urans, das in dem Teil der abgezogenen wässrigen Phase vorhanden ist, mittels einer organischen Phase gleicher Zusammensetzung wie die bei Schritt a) verwendete, gekoppelt mit einem Schritt d₁) eines Waschens dieser organischen Phase mittels einer wässrigen Salpetersäurephase A₃ umfasst.

5. Verfahren nach Anspruch 4, **dadurch gekennzeichnet, dass** der Schritt c₁) **dadurch** realisiert wird, dass man den Teil der abgezogenen wässrigen Phase der Phase A₃ zusetzt, die nach erfolgtem Schritt d₁) erhalten wurde, und den resultierenden wässrigen Fluss in einer dritten Extraktionseinrichtung (12) zirkulieren lässt, und zwar in Gegenstrom zur organischen Phase.

6. Verfahren nach Anspruch 5, **dadurch gekennzeichnet, dass** der Schritt c₁) das Abziehen eines Teiles des in der dritten Extraktionseinrichtung zirkulierenden wässrigen Flusses und das Rückführen des anderen Teils zur ersten Extraktionseinrichtung umfasst.

7. Verfahren nach Anspruch 3, **dadurch gekennzeichnet, dass** es einen Schritt c₂) umfasst, der darin besteht, den Teil der abgezogenen wässrigen Phase einer oder mehreren Chromatographien auf einer stationären festen Phase zu unterziehen.

8. Verfahren nach Anspruch 7, **dadurch gekennzeichnet, dass** die stationäre feste Phase ein lonentauscherharz ist.

9. Verfahren nach einem der vorhergehenden Ansprüche, **dadurch gekennzeichnet, dass** das Extraktionsmittel ein Tri-*n*-butyl-phosphat ist, das man vorzugsweise zu 30 Von.-% in einem organischen Verdünnungsmittel, vorzugsweise einem Dodecan, verwendet.

10. Verfahren nach Anspruch 9, **dadurch gekennzeichnet, dass** die Phase A1 eine Molarität zwischen 4 und 6 M aufweist.

11. Verfahren nach Anspruch 9 oder Anspruch 10, **dadurch gekennzeichnet, dass** die Phase A2 eine Molarität von weniger oder gleich 2 M aufweist.

12. Verfahren nach Anspruch 9 in Abhängigkeit von Anspruch 4, **dadurch gekennzeichnet, dass** die Phase A3 eine Molarität von weniger oder gleich 2 M aufweist.

13. Verfahren nach einem der vorhergehenden Ansprüche, **dadurch gekennzeichnet, dass** das chemische Element ein vierwertiges Actinoid ist, das zwischen Neptunium und Thorium 228 ausgewählt ist.

14. Verfahren zur Wiederaufbereitung eines verbrauchten Kernbrennstoffes, **dadurch gekennzeichnet, dass** es ein Verfahren zur Trennung nach einem der Ansprüche 1 bis 13 einsetzt.

15. Zyklus zur Reinigung von Uran eines PUREX-Verfahrens, **dadurch gekennzeichnet, dass** er das Ausführen eines Verfahrens zur Trennung nach einem der Ansprüche 1 bis 12 beinhaltet.

16. Zyklus zur Reinigung nach Anspruch 15, **dadurch gekennzeichnet, dass** das Verfahren eingesetzt wird, um ein vierwertiges Actinoid, das aus Neptunium und Thorium gewählt ist, von Uran (VI) zu trennen.
